# FASCICULE DE BREVET EUROPEEN

(11) **EP 3 190 333 B1**
(45) Date de publication et mention de la délivrance du brevet: **25.11.2020**
(21) Numéro de dépôt: 17150254.5
(22) Date de dépôt: 04.01.2017
(51) Int. Cl.: F21S 43/239, F21S 43/243, F21S 43/249, F21S 43/50, F21S 41/43, F21S 41/24

(54) **BLOC OPTIQUE D'ÉCLAIRAGE OU DE SIGNALISATION POUR VÉHICULE AUTOMOBILE COMPORTANT UN MASQUE OPALIN**
OPTISCHER BELEUCHTUNGS- UND/ODER SIGNALISIERUNGSBLOCK FÜR KRAFTFAHRZEUG, DER EINE OPALGLASBLENDE UMFASST
LIGHTING OR SIGNALLING OPTICAL UNIT FOR MOTOR VEHICLE COMPRISING AN OPALINE MASK

(30) Priorité: 08.01.2016 FR 1650169
(43) Date de publication de la demande: 12.07.2017
(73) Titulaire: PSA Automobiles SA, 78300 Poissy (FR)
(72) Inventeur: PERON, Rodolphe, 95220 Herblay (FR); MOYNIER, Gilles, 72000 Le Mans (FR)

(56) Documents cités:
- EP-A1- 2 587 120
- DE-A1-102010 054 923
- FR-A1- 2 967 235
- FR-A1- 2 986 305
- FR-A1- 3 002 895
- FR-A1- 3 007 821

## Description

### Domaine de l'invention

La présente invention concerne d'une manière générale le domaine des systèmes d'éclairage et de signalisation pour véhicules automobiles.

Elle concerne en particulier un bloc optique d'éclairage ou de signalisation pour véhicule automobile.

### Arrière-plan de l'invention

Un tel bloc optique comporte classiquement un boîtier dont le bord périphérique supporte une glace extérieure de couverture et renfermant au moins un feu destiné à assurer une fonction d'éclairage, comme par exemple un feu de position (dénommé également veilleuse ou bien lanterne) ou une fonction de signalisation, comme par exemple un feu de recul, un feu clignotant indicateur de changement de direction ou bien encore un feu diurne couramment désigné sous l'acronyme anglais DRL (Daytime Running Light) et s'allumant automatiquement lorsque le véhicule se déplace vers l'avant afin d'accroître sa visibilité dans des conditions de lumière du jour.

Chaque feu comprend une ou plusieurs sources lumineuses telles que des diodes lumineuses considérées désormais comme une alternative avantageuse aux ampoules à incandescence en termes de baisse de consommation d'énergie électrique, d'augmentation de la durée de vie et de liberté de style.

Ces dernières présentent cependant l'inconvénient de présenter un grand angle d'éclairage, ce qui engendre une large diffusion et beaucoup de pertes dans une application visant à éclairer une zone éloignée.

Aussi, Il est connu de prévoir à l'intérieur du boîtier un dispositif lumineux transparent comprenant au moins un guide de lumière présentant une surface d'entrée des rayons lumineux générés par une telle diode et une face avant de sortie située en regard de ladite glace de couverture

Les rayons lumineux qui atteignent cette face avant selon un angle déterminé émergent ainsi du bloc optique sous la forme d'un faisceau lumineux d'intensité lumineuse maximale orienté vers la cible à éclairer.

Afin que le guide de lumière ne soit pas visible depuis l'extérieur lorsque le feu est éteint, la demande de brevet française FR 3 014 787 propose de prévoir un masque opaque l'entourant en totalité à l'exception de sa face avant en regard de la glace extérieure de couverture.

Toutefois, lorsque le feu est éclairé, la présence d'un tel masque opaque lui donne un effet lumineux ponctuel qui n'est pas des plus esthétiques.

### Objet et résumé de l'invention

La présente invention vise donc à masquer le dispositif lumineux quand le feu est éteint tout en évitant cet effet lumineux ponctuel lorsque ce dernier est éclairé.

Elle propose à cet effet, tel que décrit dans le préambule de la revendication 1, un bloc optique d'éclairage ou de signalisation pour véhicule automobile conforme à l'enseignement du document FR3002895A ; ledit bloc étant caractérisé par la partie caractérisante de la revendication 1.

Selon des caractéristiques préférées de l'invention, prises seules ou en combinaison :
- ledit dispositif lumineux comporte une pluralité de guides de lumière associés chacun à une diode correspondante, ledit masque entourant latéralement au moins une portion desdits guides de lumière ;
- ledit dispositif lumineux comprend également une paroi support reliant lesdits guides de lumière entre eux ;
- ledit masque opalin comporte une façade recouvrant la face avant de ladite paroi support du dispositif lumineux, ainsi qu'une pluralité d'éléments saillant à l'avant de ladite façade et entourant latéralement au moins une portion desdits guides de lumière ;

- lesdits éléments saillants se présentent sous la forme de berceaux entourant latéralement les parties desdits guides de lumière situées à l'avant de ladite paroi support et à l'exception de leurs faces supérieures ;
- lesdits guides de lumière présentent une section transversale rectangulaire, lesdits berceaux présentant quant à eux une section transversale en U ;
- lesdites diodes sont de deux couleurs différentes réparties alternativement les unes à la suite des autres ;
- ledit masque opalin est réalisé d'une seule pièce par moulage à partir d'un matériau thermoplastique transparent dans lequel sont incorporées des inclusions gazeuses ou des microbilles de matériau à effet opalescent ;
- la face arrière de chaque au moins dit guide de lumière présente un profil parabolique incliné, cette dernière formant une surface réfléchissante renvoyant les rayons lumineux pénétrant par ladite surface d'entrée vers ladite face avant de sortie ; et/ou
- ladite face avant de sortie du au moins dit guide de lumière présente une forme de gradin avec des marches horizontales planes et des contremarches verticales comprenant chacune une pluralité de facettes convexes accolées latéralement.

### Brève description des dessins

L'exposé de l'invention sera maintenant poursuivi par la description détaillée d'un exemple de réalisation, donnée ci-après à titre illustratif mais non limitatif, en référence aux dessins annexés, sur lesquels :
- la figure 1 est une vue en perspective de la partie supérieure d'un bloc optique de signalisation de véhicule automobile selon l'invention dont la partie gauche a été arrachée selon le plan de coupe longitudinal vertical II- II ;
- la figure 2 est une section longitudinale verticale prise selon le plan de coupe II-II de la figure 1 de la partie supérieure du bloc optique selon l'invention ;
- la figure 3 est une section horizontale de la partie supérieure du bloc optique de la figure 1, prise selon le plan horizontal médian du dispositif lumineux ; et
- la figure 4 est une vue en perspective du dispositif lumineux et du masque que comportent le bloc optique selon l'invention.

### Description détaillée d'un mode préféré de réalisation

On définit sur les figures un repère orthogonal XYZ comprenant trois axes perpendiculaires deux à deux, à savoir :
- un axe X, définissant une direction longitudinale, parallèle à l'axe longitudinal du véhicule,
- un axe Y, définissant une direction transversale, horizontale, qui avec l'axe X définit un plan XY horizontal, et
- un axe Z, définissant une direction verticale, perpendiculaire au plan XY horizontal.

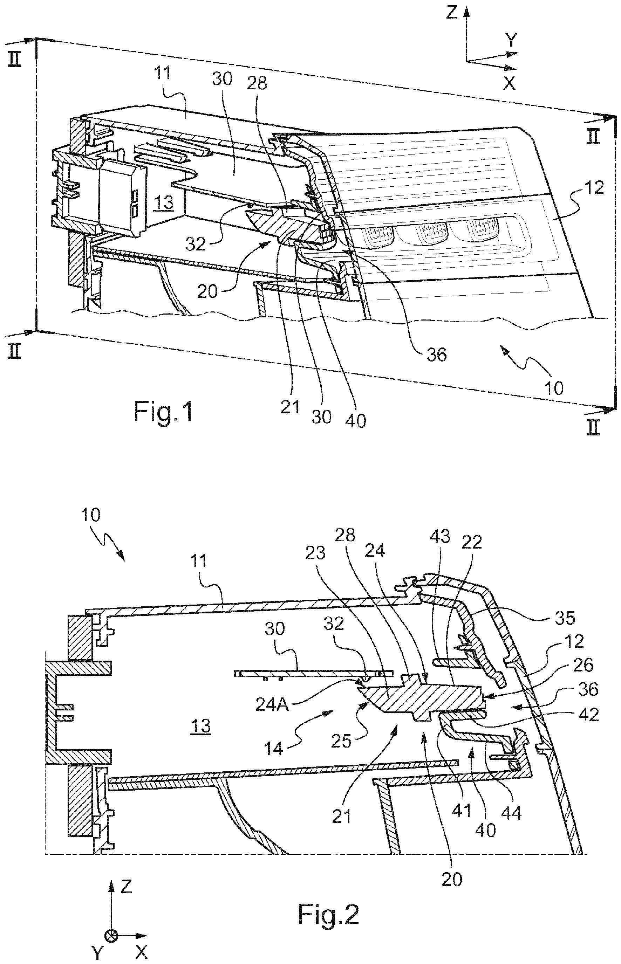

Les figures 1 à 3 représentent ici la partie supérieure d'un bloc optique arrière de signalisation 10 destiné à être monté sur la structure de caisse d'un véhicule automobile.

Ce bloc optique 10 comporte un boîtier 11 dont le bord périphérique supporte une glace extérieure de couverture transparente 12.

Dans la suite de la description, les termes « avant » et « arrière » seront employés pour désigner des portions d'un même élément orientées respectivement vers la glace extérieure de couverture 12 et vers le fond du boîtier 11.

La partie supérieure de ce boîtier 11 délimite une chambre 13 renfermant un feu 14 à double fonction (recul et indicateur de changement de direction).

Le feu 14 comporte un dispositif lumineux transparent 20 comprenant une pluralité de guides de lumière 21 (en l'espèce sept) orientés sensiblement longitudinalement et répartis latéralement à intervalle régulier le long de la glace extérieure de couverture 12, ainsi qu'une paroi support incurvée 28 reliant lesdits guides 21 entre eux et s'étendant latéralement en suivant la courbure de cette même glace extérieure 12.

Ce dispositif lumineux 20 est réalisé préférentiellement d'une seule pièce par moulage à partir d'un matériau thermoplastique transparent, éventuellement teinté dans la masse tel que le polycarbonate (PC) ou le polyméthacrylate de méthyle (PMMA).

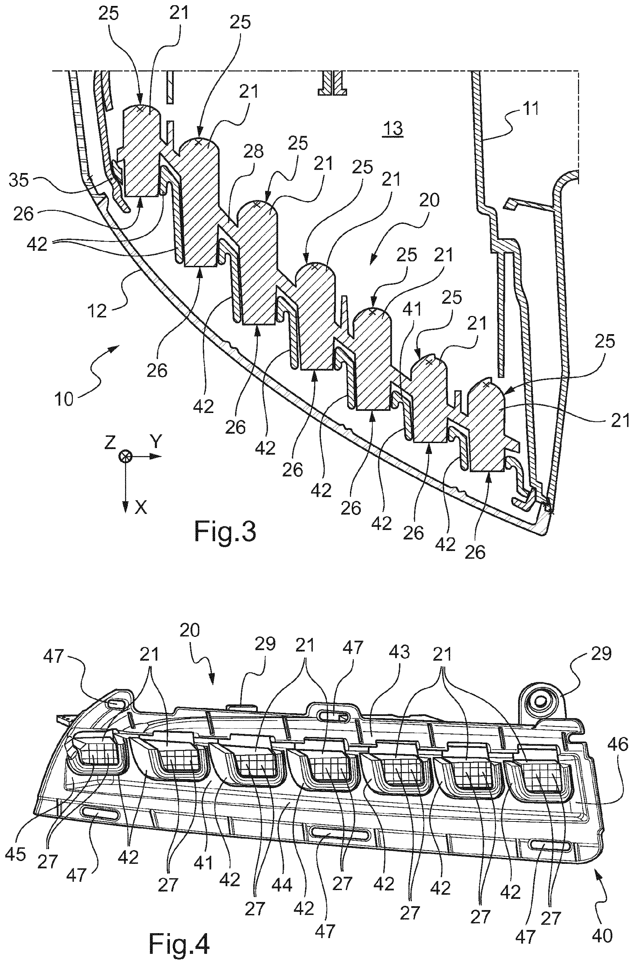

Comme illustré sur la figure 4, la paroi support 28 comprend des moyens pour permettre son attache sur le boîtier 11, ces derniers se présentant sous la forme de pattes de fixation 29 coopérant par vissage ou encliquetage avec des moyens complémentaires prévus sur ce boîtier 11.

Les guides de lumière 21 qui présentent ici une section transversale sensiblement rectangulaire, comprennent une partie avant 22 saillant à l'avant de la paroi support 28 et une partie arrière 23 saillant à l'arrière de cette même paroi support 28 (voir figure 2).

Le feu 14 comporte également une carte à circuits imprimés 30 de type PCB (pour « Printed Circuit Board ») s'étendant horizontalement à l'intérieur de la chambre 13 et étant fixée au boîtier 11 par des moyens de fixation coopérant par encliquetage avec des moyens complémentaires prévus sur ce boîtier 11.

La carte 30 porte sept sources lumineuses 32 constituées en l'espèce par des diodes lumineuses de type électroluminescentes (LEDS) ou laser (une pour chaque guide de lumière 21).

Ces dernières sont de deux couleurs différentes, à savoir quatre de couleur blanche destinées à assurer la fonction recul et trois de couleur orange pour la fonction d'indication de changement de direction.

Les sept diodes blanches et orange 32 sont réparties alternativement les unes à la suite des autres de manière à se trouver chacune à l'aplomb de l'extrémité arrière 24A de la face supérieure 24 d'un guide de lumière 21 correspondant.

On notera à l'appui de la figure 2 que les diodes 32 présentent des axes d'émission verticaux sensiblement perpendiculaires à ces faces supérieures planes et horizontales 24 dont les extrémités arrière 24A constituent les surfaces d'entrée dans les guides 21 des rayons lumineux émis par ces diodes.

Comme illustré sur les figures 2 et 3, la face arrière 25 de chaque guide de lumière 21 présente un profil parabolique incliné, cette dernière formant une surface réfléchissante grâce à laquelle la lumière pénétrant par l'extrémité arrière 24A de a surface supérieure 24 de ce guide 21 est renvoyée vers sa face avant de sortie 26 (tournée vers la glace extérieure de couverture 12) sous la forme d'un faisceau à rayons parallèles orienté selon une direction sensiblement longitudinale.

Cette face avant de sortie 26 de chacun des guides de lumière 21 présente une forme de gradin avec des marches horizontales planes et des contremarches verticales comprenant chacune une pluralité de facettes convexes 27 accolées latéralement (figures 2 et 4), de sorte à assurer une diffusion de la lumière selon un cône d'émission conforme à la grille photométrique réglementaire qui impose le respect d'une plage d'intensité lumineuse spécifique pour chacun des points de cette grille.

Le feu 14 comporte également un écran opaque 35 situé juste derrière la glace extérieure de couverture 12 et présentant en regard du dispositif lumineux 20 une fenêtre sensiblement rectangulaire 36 autorisant le passage des rayons lumineux sortant des guides de lumière 21 en direction de cette glace extérieure de couverture 12.

Cet écran opaque 35, fixé au boîtier 11, permet ainsi de dissimuler la partie supérieure de la chambre 13 hébergeant la carte à circuits imprimés 30 lorsque les diodes 32 sont éteintes.

Le feu 14 comprend en outre un masque opalin 40 rapporté sur le dispositif lumineux 20 et réalisé avantageusement d'une seule pièce par moulage à partir d'un matériau thermoplastique transparent tel que le polycarbonate (PC) ou le polyméthacrylate de méthyle (PMMA) dans lequel sont incorporées des inclusions gazeuses ou des microbilles de matériau à effet opalescent.

Plus précisément, le masque opalin 40 comporte une façade incurvée 41 recouvrant la face avant de la paroi support 28 du dispositif lumineux 20 ainsi que sept berceaux 42, à section transversale en U, saillant à l'avant de la façade 41 et entourant latéralement les parties avant 22 des guides de lumière 21 à l'exception de leurs faces supérieures (figures 1 à 4).

Le masque opalin 40 comprend également quatre parois latérales 43, 44, 45, 46 s'étendant à l'avant de la façade 41 depuis ses bords latéraux jusqu'au dos de l'écran opaque 35. Il est par ailleurs à fixé à l'écran 35 par l'intermédiaire de moyens de fixation 47 ménagés sur les bords libres recourbés de ses deux parois latérales supérieure 43 et inférieure 44, et coopérant par encliquetage avec des moyens complémentaires prévus sur cet écran 35.

Lorsque les diodes 32 sont éteintes, le masque opalin 40 présente un aspect sensiblement opaque dissimulant le dispositif lumineux 20 à l'exception des faces avant 26 et supérieure 24 des guides de lumière 21.

Ainsi, un observateur regardant le bloc optique 10 depuis l'arrière du véhicule percevra sept carrés ponctuels illuminés correspondant aux sept faces avant 26des guides de lumière 21 réfléchissant les rayons lumineux provenant de l'extérieur (les faces supérieures 24 de ces guides 21 n'étant pas visibles car cachées par le pourtour périphérique supérieur de la fenêtre 36 de l'écran 35 s'interposant entre ces dernières et les yeux de l'observateur).

A l'inverse, lorsque les diodes 32 blanches ou orange sont éclairées, le masque opalin 40 génère un effet lumineux diffus.

Ainsi, un observateur regardant le bloc optique 10 depuis l'arrière du véhicule percevra un éclairage sensiblement homogène sur toute la surface délimitée par le contour de la fenêtre sensiblement rectangulaire 36 de l'écran 35.

Selon des variantes de réalisation non représentées, le nombre de diodes 32 et de guides de lumière 21 est différent, ce dernier étant par exemple compris entre un et dix.

Selon d'autres variantes de réalisation non représentées, les diodes sont toutes de la même couleur de sorte que le feu 14 assure une unique fonction d'éclairage ou de signalisation telle que recul, indicateur de changement de direction, DRL ou bien lanterne.

Selon encore d'autres variantes de réalisation on représentées, la forme et/ou les dimensions des guides de lumière sont également différents. La section de ces guides n'est ainsi pas forcément rectangulaire mais par exemple circulaire, carré, pentagonale ou encore hexagonale.

D'une manière générale, on rappelle que la présente invention est définie par les présentes revendications et ne se limite pas aux formes de réalisation décrites et représentées, mais englobe toute variante d'exécution à la portée de l'homme du métier.

En particulier, on notera que l'invention n'est pas limitée à un type d'implantation particulier et qu'elle concerne également les blocs optiques de signalisation et/ou d'éclairage destinés à être implantés à l'avant du véhicule.

## Revendications

1. Bloc optique d'éclairage ou de signalisation pour véhicule automobile comportant un boîtier (11) dont le bord périphérique supporte une glace extérieure de couverture (12) ;
ledit boîtier (11) renfermant un feu (14) comportant au moins une diode lumineuse (32) ainsi qu'un dispositif lumineux transparent (20) comprenant au moins un guide de lumière (21) présentant une surface d'entrée (24A) des rayons lumineux générés par ladite diode, à l'extrémité arrière d'une face supérieure (24), une face arrière (25) formant une surface réfléchissante pour les rayons lumineux pénétrant par la surface d'entrée (24A), et une face avant de sortie (26), située en regard de ladite glace de couverture (12) et recevant les rayons réfléchis par la face arrière (25);
ledit feu (14) comprenant en outre un masque (40) réalisé dans un matériau opalin, entourant latéralement au moins une portion dudit guide de lumière (21) ;
**caractérisé en ce que**, lorsque la diode (32) est éteinte, le masque opalin (40) présente un aspect opaque dissimulant le dispositif lumineux (20) à l'exception de la face avant de sortie (26) et de la face supérieure (24) du guide de lumière (21) et **en ce que**, lorsque la diode (32) est allumée , le masque opalin (40) génère un effet lumineux diffus.

2. Bloc optique d'éclairage ou de signalisation selon la revendication 1, **caractérisé en ce que** ledit dispositif lumineux (20) comporte une pluralité de guides de lumière (21) associés chacun à une diode (32) correspondante, ledit masque (40) entourant latéralement au moins une portion desdits guides de lumière (21).

3. Bloc optique d'éclairage ou de signalisation selon la revendication 2, **caractérisé en ce que** ledit dispositif lumineux (20) comprend également une paroi support (28) reliant lesdits guides de lumière (21) entre eux.

4. Bloc optique d'éclairage ou de signalisation selon la revendication 3, **caractérisé en ce que** ledit masque opalin (40) comporte une façade (41) recouvrant la face avant de ladite paroi support (28) du dispositif lumineux (20), ainsi qu'une pluralité d'éléments (42) saillant à l'avant de ladite façade (41) et entourant latéralement au moins une portion desdits guides de lumière (21).

5. Bloc optique d'éclairage ou de signalisation selon la revendication 4, **caractérisé en ce que** lesdits éléments saillants se présentent sous la forme de berceaux (42) entourant latéralement les parties (22) desdits guides de lumière (21) situées à l'avant de ladite paroi support (28) et à l'exception de leurs faces supérieures.

6. Bloc optique d'éclairage ou de signalisation selon la revendication 5, **caractérisé en ce que** lesdits guides de lumière (21) présentent une section transversale rectangulaire, lesdits berceaux (42) présentant quant à eux une section transversale en U.

7. Bloc optique d'éclairage ou de signalisation selon l'une des revendications 2 à 6, **caractérisé en ce que** lesdites diodes (32) sont de deux couleurs différentes réparties alternativement les unes à la suite des autres.

8. Bloc optique d'éclairage ou de signalisation selon l'une des revendications 1 à 7, **caractérisé en ce que** ledit masque opalin (40) est réalisé d'une seule pièce par moulage à partir d'un matériau thermoplastique transparent dans lequel sont incorporées des inclusions gazeuses ou des microbilles de matériau à effet opalescent.

9. Bloc optique d'éclairage ou de signalisation selon l'une des revendications 1 à 8, **caractérisé en ce que** la face arrière (25) de chaque au moins dit guide de lumière (21) présente un profil parabolique incliné, cette dernière formant une surface réfléchissante renvoyant les rayons lumineux pénétrant par ladite surface d'entrée (24) vers ladite face avant de sortie (26).

10. Bloc optique d'éclairage ou de signalisation selon l'une des revendications 1 à 9, **caractérisé en ce que** ladite face avant de sortie (26) du au moins dit guide de lumière (21) présente une forme de gradin avec des marches horizontales planes et des contremarches verticales comprenant chacune une pluralité de facettes convexes (27) accolées latéralement.

## Patentansprüche

1. Optische Beleuchtungs- oder Signalgebungseinheit für ein Kraftfahrzeug mit einem Gehäuse (11), dessen Umfangsrand eine äußere Abdeckscheibe (12) trägt;
wobei das Gehäuse (11) ein Licht (14) mit mindestens einer Leuchtdiode (32) und eine transparente Lichtvorrichtung (20) mit mindestens einem Lichtleiter (21) enthält, der am hinteren Ende einer oberen Fläche (24) eine Eintrittsfläche (24A) für die von der Diode erzeugten Lichtstrahlen aufweist, eine Rückfläche (25), die eine reflektierende Oberfläche für die durch eine Eintrittsfläche (24A) eintretenden Lichtstrahlen bildet, und eine vordere Austrittsfläche (26), die gegenüber dem Deckglas (12) angeordnet ist und die von der Rückfläche (25) reflektierten Strahlen empfängt;
wobei das Licht (14) ferner eine Maske (40) aus einem opalinen Material aufweist, die mindestens einen Teil des Lichtleiters (21) seitlich umgibt;
**dadurch gekennzeichnet, dass** die opale Maske (40) bei ausgeschalteter Diode (32) ein undurchsichtiges Erscheinungsbild aufweist, das die Leuchtvorrichtung (20) mit Ausnahme der vorderen Austrittsfläche (26) und der oberen Fläche (24) des Lichtleiters (21) verdeckt, und dass die opale Maske (40) bei eingeschalteter Diode (32) einen diffusen Lichteffekt erzeugt.

2. Optische Beleuchtungs- oder Signalgebungseinheit nach Anspruch 1, **dadurch gekennzeichnet, dass** die Beleuchtungsvorrichtung (20) eine Vielzahl von Lichtleitern (21) umfasst, die jeweils einer entsprechenden Diode (32) zugeordnet sind, wobei die Maske (40) mindestens einen Teil der Lichtleiter (21) seitlich umgibt.

3. Optische Beleuchtungs- oder Signalgebungseinheit nach Anspruch 2, **dadurch gekennzeichnet, dass** die Leuchtvorrichtung (20) auch eine Trägerwand (28) umfasst, die die Lichtleiter (21) miteinander verbindet.

4. Optische Beleuchtungs- oder Signalgebungseinheit nach Anspruch 3, **dadurch gekennzeichnet, dass** die opale Maske (40) eine Fassade (41) umfasst, die die Vorderseite der Trägerwand (28) der Beleuchtungsvorrichtung (20) abdeckt, sowie eine Vielzahl von Elementen (42), die an der Vorderseite der Fassade (41) vorstehen und zumindest einen Teil der Lichtleiter (21) seitlich umgeben.

5. Optischer Beleuchtungs- oder Signalgebungsblock nach Anspruch 4, **dadurch gekennzeichnet, dass** die vorspringenden Elemente die Form von Wiegen (42) haben, die die Teile (22) der Lichtleiter (21), die sich an der Vorderseite der Stützwand (28) befinden, seitlich umgeben, und zwar mit Ausnahme ihrer oberen Flächen.

6. Optische Beleuchtungs- oder Signalgebungseinheit nach Anspruch 5, **dadurch gekennzeichnet, dass** die Lichtleiter (21) einen rechteckigen Querschnitt haben, wobei die Halterungen (42) ihrerseits einen U-förmigen Querschnitt haben.

7. Optische Beleuchtungs- oder Signalgebungseinheit nach einem der Ansprüche 2 bis 6, **dadurch gekennzeichnet, dass** die genannten Dioden (32) von zwei verschiedenen Farben sind, die abwechselnd nacheinander verteilt sind.

8. Optische Beleuchtungs- oder Signalgebungseinheit nach einem der Ansprüche 1 bis 7, **dadurch gekennzeichnet, dass** die opale Maske (40) in einem Stück durch Gießen aus einem transparenten thermoplastischen Material hergestellt ist, in das gasförmige Einschlüsse oder Mikroperlen aus einem Material mit Opalwirkung eingearbeitet sind.

9. Optische Beleuchtungs- oder Signalgebungseinheit nach einem der Ansprüche 1 bis 8, **dadurch gekennzeichnet, dass** die Rückseite (25) jedes mindestens einen der genannten Lichtleiter (21) ein geneigtes parabolisches Profil aufweist, wobei letzterer eine reflektierende Oberfläche bildet, die die durch die genannte Eintrittsfläche (24) eindringenden Lichtstrahlen zur genannten vorderen Austrittsfläche (26) reflektiert.

10. Optische Beleuchtungs- oder Signalgebungseinheit nach einem der Ansprüche 1 bis 9, **dadurch gekennzeichnet, dass** die vordere Austrittsfläche (26) mindestens des Lichtleiters (21) eine Stufenform mit flachen horizontalen Stufen und vertikalen Erhöhungen aufweist, die jeweils eine Vielzahl von seitlich aneinander anschließenden konvexen Facetten (27) aufweisen.

## Claims

1. Optical lighting or signalling unit for a motor vehicle comprising a housing (11) whose peripheral edge supports an outer covering glass (12) ;
said housing (11) containing a light (14) comprising at least one light-emitting diode (32) and a transparent light device (20) comprising at least one light guide (21) having an entry surface (24A) for the light rays generated by said diode, at the rear end of an upper face (24), a rear face (25) forming a reflecting surface for the light rays entering through an entrance surface (24A), and a front exit face (26), located opposite said cover glass (12) and receiving the rays reflected by the rear face (25);
said light (14) further comprising a mask (40) made of an opaline material, laterally surrounding at least a portion of said light guide (21);
**characterized in that**, when the diode (32) is switched off, the opaline mask (40) has an opaque appearance concealing the luminous device (20) with the exception of the front exit face (26) and the upper face (24) of the light guide (21) and **in that**, when the diode (32) is switched on, the opaline mask (40) generates a diffuse light effect.

2. Optical lighting or signalling unit according to claim 1, **characterized in that** said lighting device (20) comprises a plurality of light guides (21) each associated with a corresponding diode (32), said mask (40) laterally surrounding at least a portion of said light guides (21).

3. Optical Lighting or signalling optical block according to claim 2, **characterized in that** said luminous device (20) also comprises a support wall (28) connecting said light guides (21) together.

4. optical lighting or signalling unit according to claim 3, **characterized in that** said opaline mask (40) comprises a facade (41) covering the front face of said support wall (28) of the luminous device (20), as well as a plurality of elements (42) projecting at the front of said facade (41) and laterally surrounding at least a portion of said light guides (21).

5. Optical Lighting or signalling optical block according to claim 4, **characterized in that** said protruding elements are in the form of cradles (42) laterally surrounding the parts (22) of said light guides (21) located in front of said support wall (28) and except for their upper faces.

6. Optical Lighting or signalling optical unit according to claim 5, **characterized in that** said light guides (21) have a rectangular cross-section, said cradles (42) in turn having a U-shaped cross-section.

7. Optical Lighting or signalling optical unit according to one of claims 2 to 6, **characterized in that** said diodes (32) are of two different colors distributed alternately one after the other.

8. Optical Lighting or signalling optical unit according to one of claims 1 to 7, **characterized in that** the said opaline mask (40) is made in one piece by moulding from a transparent thermoplastic material in which are incorporated gaseous inclusions or microbeads of material with an opalescent effect.

9. Optical unit for lighting or signalling according to one of claims 1 to 8, **characterized in that** the rear face (25) of each at least one said light guide (21) has an inclined parabolic profile, the latter forming a reflecting surface which reflects the light rays penetrating through said inlet surface (24) towards said front outlet face (26).

10. Optical unit for lighting or signalling according to one of claims 1 to 9, **characterized in that** said front exit face (26) of at least said light guide (21) has a stepped shape with flat horizontal steps and vertical risers each comprising a plurality of convex facets (27) joined laterally.
